# EUROPÄISCHE PATENTSCHRIFT

(11) **EP 0 613 798 B1**
(45) Veröffentlichungstag und Bekanntmachung des Hinweises auf die Patenterteilung: **22.05.1996**
(21) Anmeldenummer: 93119598.6
(22) Anmeldetag: 06.12.1993
(51) Int. Cl.: B60J 5/04

(54) **Fahrzeugtür, insbesondere Kraftfahrzeugtür**
Vehicle door, especially for motor vehicles
Porte de véhicule, notamment pour automobiles

(30) Priorität: 04.03.1993 DE 4306668
(43) Veröffentlichungstag der Anmeldung: 07.09.1994
(73) Patentinhaber: YMOS AKTIENGESELLSCHAFT Industrieprodukte, D-63179 Obertshausen (DE)
(72) Erfinder: Heim, Gunther, Dipl.-Ing., D-63179 Obertshausen (DE); Kroll, Bruno, Dipl.-Ing., D-42477 Radevormwald (DE)
(74) Vertreter: Schieferdecker, Lutz, Dipl.-Ing.

(56) Entgegenhaltungen:
- AT-B- 118 293
- US-A- 4 300 315

## Beschreibung

Die Erfindung betrifft eine insbesondere als Kraftfahrzeugtür bestimmte Fahrzeugtür mit den Merkmalen des Oberbegriffes des Anspruches 1.

Eine Fahrzeugtür der hier interessierenden Art umfasst in Rahmenbauweise einen tragenden, ein Türtragemodul bildenden Türrahmen mit mindestens einem vorderen und einem hinteren bzw. einem oberen und einem unteren Rahmenteil und weist ferner weitere, hier nicht im einzelnen interessierende Türelemente auf. Dazu gehören z.B. ein Fensterheber zum Öffnen und Schließen einer Fensterscheibe sowie Führungselemente zur Führung der Fensterscheibe und Scharniere sowie ein Türschloß und die zugehörigen Bedienungselemente einschließlich einer Türinnenverkleidung. Bei bisher bekannten bzw. vorgeschlagenen Kraftfahrzeugtüren in Rahmenbauweise stellt die Anbindung der weiteren Türelemente an den Türrahmen zum Teil ein erhebliches Problem dar, so daß der Erfindung die Aufgabe zugrunde liegt, hier eine möglichst einfache Konstruktion zu schaffen.

Zur Lösung dieser Aufgabe sieht die Erfindung vor, daß das untere Rahmenteil und das vordere sowie das hintere Rahmenteil jeweils Strangprofilteile sind und mindestens über einen Teil ihrer Länge mit einem als Träger dienenden Hohl- und/oder Kastenquerschnitt und mit mindestens einem als Zwischen- und Anschlußstück dienenden Schenkel versehen sind.

Außerdem wird ein Rahmenteil und ein Rohling für ein Rahmenteil für eine derartige Fahrzeugtür in gesonderten unabhängigen Ansprüchen definiert.

Die Verwendung von Strangprofilteilen mit zusätzlichen, abwinkelbaren Schenkeln führt zu einer außerordentlich einfachen und kostengünstig herstellbaren Konstruktion. Die Schenkel müssen nämlich nur entsprechend der Lage zugeschnitten und abgewinkelt werden und ergeben damit bereits nach der zusätzlichen Einbringung von Befestigungsöffnungen den Raum zwischen der Türaußenhaut und der Türinnenverkleidung überbrückende Zwischenstücke sowie zur Befestigung der Türinnenverkleidung dienende Anschlußstücke, die ferner einstückig mit dem tragenden Türrahmen verbunden sind. Anstelle vieler Einzelteile, die jeweils gesondert bearbeitet und dann zusammengefügt werden müssen, macht die Erfindung somit im wesentlichen nur von einem Strangprofil Gebrauch, das maschinell bearbeitet wird und sodann unter Einsparung etlicher, bisher benötigter Teile eingesetzt wird.

In Weiterbildung der Erfindung ist vorgesehen, daß nicht der gesamte Schenkel relativ zum Hohl-und/oder Kastenquerschnitt abgewinkelt wird, sondern daß von den Schenkeln je zur Befestigung von Türinnenteilen dienende, schmale sowie längliche Randstücke umgebogen werden. Hierdurch entstehen die jeweiligen Zwischenstücke und die zugehörigen Anschlußstücke.

Weitere Merkmale der Erfindung gehen aus den abhängigen Ansprüchen 2 bis 6 hervor.

Die Erfindung wird nachstehend anhand eines Ausführungsbeispieles, das in der Zeichnung dargestellt ist, näher beschrieben. Dabei zeigen:
- Fig. 1 :: eine perspektivische Ansicht eines als Türtragemodul dienenden Türrahmens;
- Fig. 2:: einen Schnitt längs der Linie II-II in Fig.1;
- Fig. 3:: einen Schnitt längs der Linie III-III in Fig. 1;
- Fig. 4:: einen Schnitt längs der Linie IV-IV in Fig. 1;
- Fig. 5:: einen Schnitt längs der Linie V-V in Fig. 1 und
- Fig. 6:: eine perspektivische Ansicht eines Strangprofilteiles in größerem Maßstab mit einem teilweise abgewinkelten Schenkel.

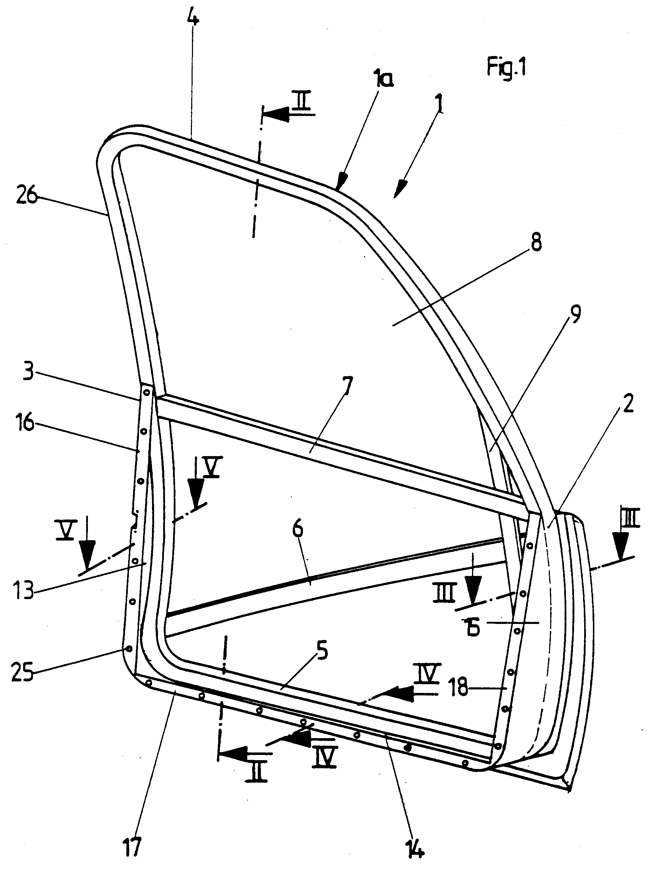

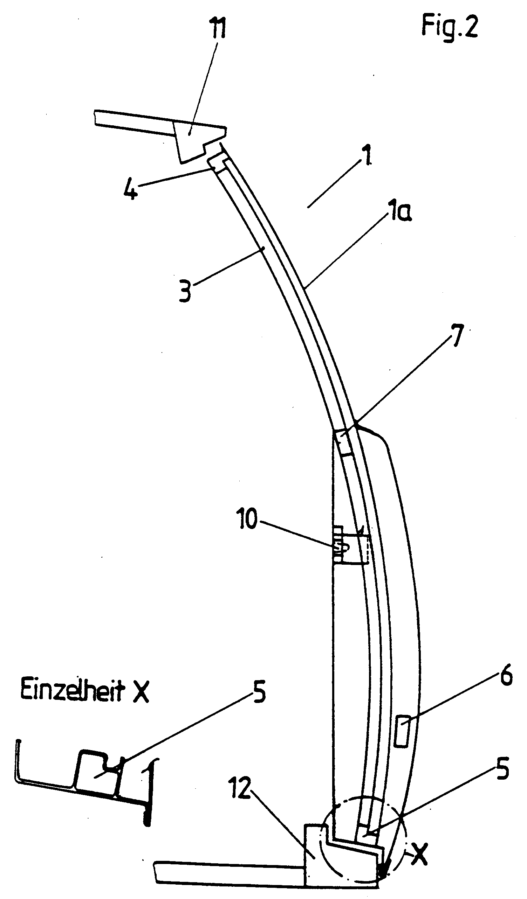

Zur Herstellung einer Fahrzeugtür und insbesondere einer Kraftfahrzeugtür in Rahmenbauweise ist gemäß dem in Fig. 1 dargestellten Ausführungsbeispiel ein Türrahmen 1 vorgesehen, der ein Türtragemodul 1a darstellt, das mindestens ein vorderes Rahmenteil 2, ein hinteres Rahmenteil 3 und ein oberes Rahmenteil 4 sowie ein unteres Rahmenteil 5 umfasst. Eine Diagonalstrebe 6 dient zur Versteifung und ein waagerecht angeordnetes Rahmenteil 7 begrenzt eine Fensteröffnung 8 nach unten. Ferner ist ein Fensterrahmenteil 9 vorgesehen und dient zur Führung einer nicht dargestellten Fensterscheibe. Zur Komplettierung der Fahrzeugtür dienen ferner in Fig. 1 nicht dargestellte Türelemente wie z.B. ein Fensterheber oder Scharniere bzw. Schloßelemente 1o gemäß Fig. 2. Diese Fig. 2 zeigt ferner in schematischer Darstellung obere und untere, tragende Karosserieteile 11 und 12, auf die es hier ebenfalls nicht ankommt. Auch eine Türaußenhaut und eine Türinnenverkleidung sind grundsätzlich erforderlich und in den Figuren nicht dargestellt.

Sämtliche in den Figuren nicht dargestellten Türelemente müssen in funktionsgerechter Weise mit dem tragenden Türrahmen 1 verbunden werden, wobei es ferner erforderlich ist, daß zwischen einer Türaußenhaut und einer Türinnenverkleidung ausreichend Raum und Volumen zur Verfügung stehen. Dabei kann die Türaußenhaut direkt oder indirekt außen auf dem Türrahmen 1 befestigt werden. Für die Türinnenverkleidung ist dies grundsätzlich nicht möglich, da sich diese wegen der innerhalb der Tür befindlichen Türelemente in einem ausreichenden Abstand von der Türaußenhaut befinden muß. Um diesen Abstand zu schaffen, sind Zwischenstücke 13, 14 und 15 sowie Anschlußstücke 16, 17 und 18 vorgesehen. Diese Zwischenstücke 13, 14 und 15 und die Anschlußstücke 16, 17 und 18 sind einstückig mit dem den Türrahmen 1 bildenden Rahmenteilen 2, 3 und 5 verbunden. Hierdurch werden eine kostengünstige Herstellung, eine unkomplizierte und einfache Bauweise sowie eine hohe Festigkeit und Verwindungssteifigkeit erzielt.

Erreicht wird die in Fig. 1 dargesellte Konstruktion insbesondere dadurch, daß das untere Rahmenteil 5 und das vordere sowie das hintere Rahmenteil 2, 3 mindestens über einen Teil ihrer Länge jeweils Strangprofilteile 2o mit jeweils einem als Träger dienenden Hohl- und/oder Kastenquerschnitt 21 und mit jeweils als Zwischen- und Anschlußstück 13 - 18 dienenden, zuschneidbaren sowie abwinkelbaren Schenkeln 22 sind.

Das Profilteil 23 mit dem Hohl- und/oder Kastenquerschnitt 21 dient im unteren Bereich des Türrahmens 1 als vorderes, hinteres bzw. unteres Rahmenteil 2, 3 und 5, während der Schenkel 22 zur Bildung der Zwischenstücke 13 - 15 und der Anschlußstücke 16 - 18 verwendet wird.

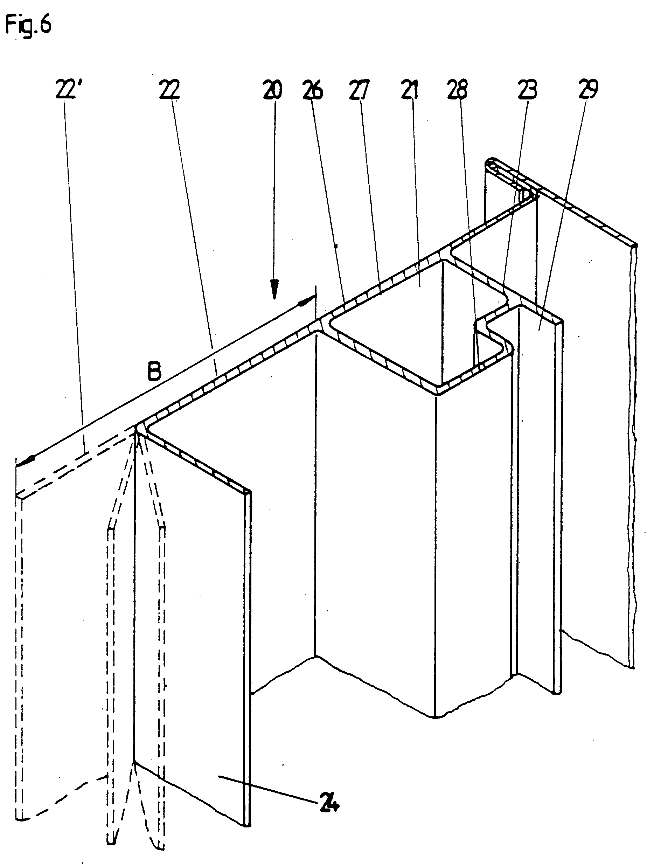

Fig. 6 zeigt eine abgeschnittene sowie abgebrochene, perspektivische Darstellung des die Rahmenteile 2, 3 und 5 bildenden Strangprofilteiles 2o, wobei der Schenkel 22 gemäß der gestrichelten Darstellung 22' bei der Fertigung im Strangpreßautomaten zunächst flach und eben ist. Gemäß der Form und Gestalt der jeweiligen Zwischenstücke 13 - 15 wird dieser Schenkel 22 sodann zugeschnitten und schließlich abgewinkelt, wobei der abgewinkelte Teil 24 das jeweilige Anschlußstück 16, 17 oder 18 ergibt und sich parallel zu dem Profilteil 23 mit dem Hohl- und/oder Kastenquerschnitt erstreckt. Die von dem jeweiligen Schenkel 22 gebildeten Zwischenstücke 13 - 15 erhalten entsprechend der Türform über ihre Länge eine unterschiedliche Breite, wie dies insbesondere auch in Fig. 1 anhand des Zwischenstückes 15 zu erkennen ist. Die abgewinkelten und als Anschlußstücke 16 - 18 dienenden Teile 24 der Schenkel 22 der Strangprofilteile 2o weisen über ihre Länge eine gleichmäßige Breite auf. Auch dies ist aus Fig. 1 ersichtlich.

Die abgewinkelten Teile 24 sind Randstücke, die zweckmäßigerweise mit Durchtrittsöffnungen 25 versehen sind, damit die Türinnenverkleidung direkt oder indirekt befestigt werden kann.

Der zuschneidbare und abwinkelbare Schenkel 22 des Strangprofilteiles 2o erstreckt sich in Verlängerung des die Außenkontur 26 des Türrahmens 1 bildenden Profilteiles 27 des Hohl- und/oder Kastenquerschnitts 21.

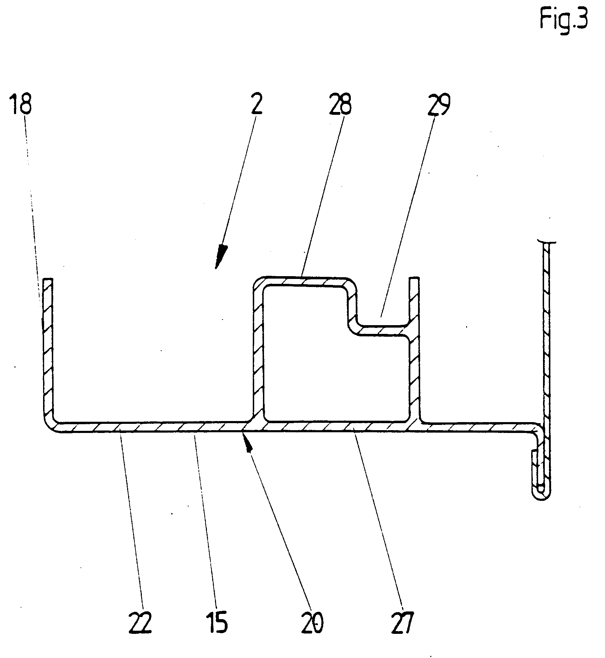

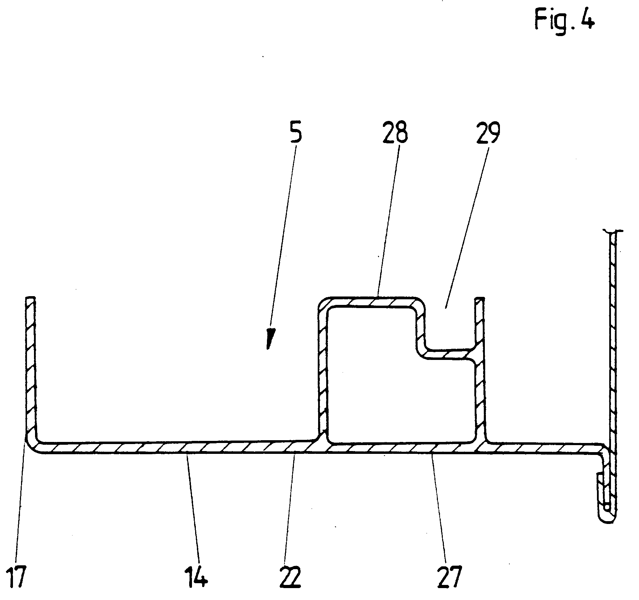

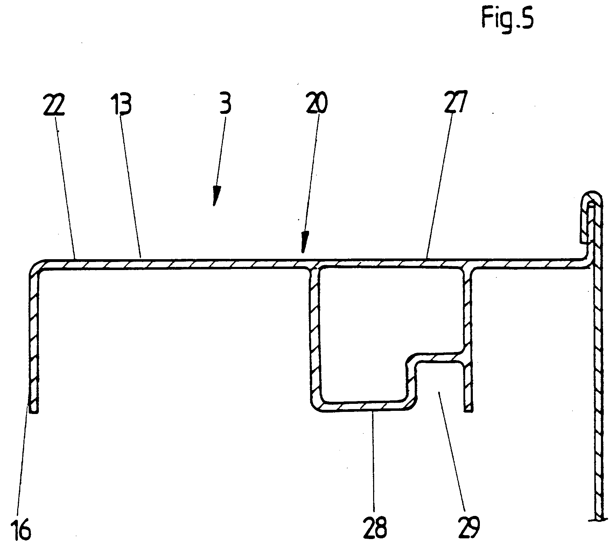

Wie die Figuren 3 - 6 schließlich noch zeigen, ist in den Hohl-und/oder Kastenquerschnitt 21 des Strangprofiles 2o zugleich ein Führungskanal 29 für eine in den Figuren nicht dargestellte Fensterscheibe integriert. Dieser Führungskanal 29 dient zweckmäßigerweise unmittelbar zur Aufnahme eines ebenfalls nicht dargestellten Dichtungs- und Führungselementes, in dem die Fensterscheibe mit ihrem Rand geführt ist.

Die Figuren 3 - 5 zeigen Schnitte durch die Rahmenteile 2, 3 und 5, wobei insbesondere deutlich ist, daß die als Zwischenstücke 13, 14 und 15 dienenden Teile des Schenkels 22 unterschiedlich breit sind. Dies ergibt sich auf Grund der Form und Gestalt der Fahrzeugtür im Bereich des vorderen, hinteren bzw. unteren Rahmenteiles 2, 3 bzw. 5 und wird dadurch erreicht, daß die bei der Herstellung der Strangprofilteile 2o grundsätzlich eine gleiche Breite B (Fig. 6) aufweisenden Schenkel 22 zunächst in geeigneter Weise zugeschnitten und sodann unter Bildung der als Anschlußstücke 16- 18 dienenden Randstücke 24 bzw. abgewinkelten Teile 24 teilweise umgebogen werden.

## Patentansprüche

1. Fahrzeugtür, insbesondere Kraftfahrzeugtür in Rahmenbauweise, die einen tragenden, ein Türtragemodul (1a) bildenden Türrahmen (1) mit mindestens einem vorderen und einem hinteren bzw. einem oberen und einem unteren Rahmenteil (2, 3, 4, 5) umfaßt und weitere Türelemente aufweist, dadurch gekennzeichnet, daß das untere Rahmenteil (5) und das vordere sowie das hintere Rahmenteil (2, 3) jeweils Strangprofilteile (20) sind und mindestens über einen Teil ihrer Länge mit einem als Träger dienenden Hohl- und/oder Kastenquerschnitt (21) und mit mindestens einem als Zwischen- und Anschlußstück (13 bis 15 bzw. 16 bis 18) dienenden Schenkel (22) versehen sind.

2. Fahrzeugtür nach Anspruch 1, dadurch gekennzeichnet, daß die Schenkel (22) zur Bildung von Zwischenstücken (13- 15) zugeschnitten sind.

3. Fahrzeugtür nach einem oder mehreren der vorhergehenden Ansprüche, dadurch gekennzeichnet, daß die Schenkel (22) jeweils zur Befestigung von Türinnenteilen dienende, schmale sowie längliche Randstücke / abgewinkelte Teile (24) aufweisen..

4. Fahrzeugtür nach einem oder mehreren der vorhergehenden Ansprüche, dadurch gekennzeichnet, daß sich der mindestens teilweise abgewinkelte Schenkel (22) des Strangprofilteiles (2o) in Verlängerung des die Außenkontur (26) des Türrahmens (1) bildenden Profilteiles (27) des Hohl- und / oder Kastenquerschnitts (21) erstreckt.

5. Fahrzeugtür nach einem oder mehreren der vorhergehenden Ansprüche, dadurch gekennzeichnet, daß in den Hohl- und/oder Kastenquerschnitt (21) des Strangprofilteiles (2o) in den die Innenkontur (28) des Türrahmens (1) bildenden Profilteil zugleich ein Führungskanal (29) für eine Fensterscheibe integriert ist.

6. Fahrzeugtür nach einem oder mehreren der vorhergehenden Ansprüche, dadurch gekennzeichnet, daß der Schenkel (22) abgewinkelt ist.

7. Rahmenteil für eine Kraftfahrzeugtür, gekennzeichnet durch ein Strangprofil mit einem als Träger dienenden Hohl- und/oder Kastenquerschnitt (21) und mit mindestens einem als Zwischen- und Anschlußstück (13 bis 15 bzw. 16 bis 18) dienenden Schenkel (22).

8. Rohling für ein Rahmenteil für eine Kraftfahrzeugtür, gekennzeichnet durch ein Strangprofil mit jeweils einem als Träger dienenden Hohl- und/oder Kastenquerschnitt (21) und mit mindestens einem als Zwischen- und Anschlußstück (13 bis 15 bzw. 16 bis 18) dienenden Schenkel (22).

## Claims

1. A vehicle door, in particular a motor vehicle door, of a frame-type structure, which includes a load-bearing door frame (1) forming a door support module (1a) and having at least a front and a rear and an upper and a lower frame portion (2, 3, 4, 5) respectively and which has further door elements characterised in that the lower frame portion (5) and the front and the rear frame portions (2, 3) are each respective extrusion portions (20) and are provided at least over a part of their length with a hollow and/or hex cross-section (21) serving as a support and with at least one limb (22) serving as an intermediate and connecting portion (13 to 15 and 16 to 18 respectively).

2. A vehicle door according to claim 1 characterised in that the limbs (22) are cut to size to form intermediate portions (13-15).

3. A vehicle door according to one or are of the preceding claims characterised in that the limbs (22) have respective narrow and elongate edge portions/angled portions (24), which serve for fixing internal door portions.

4. A vehicle door according to one or are of the preceding claims characterised in that the at least partially angled limb (22) of the extrusion portion (20) extends as a prolongation of the profile portion (27) of the hollow and/or hex cross-section (21), which profile portion forms the outside contour (26) of the door frame (1).

5. A vehicle door according to one or more of the preceding claims characterised in that a guide channel (29) for a window pane is at the same time integrated into the hollow and/or hex cross-section (21) of the extrusion portion (20) into the profile portion which forms the internal contour (28) of the door frame (1).

6. A vehicle door according to one or are of the preceding claims characterised in that the limb (22) is angled.

7. A frame portion for a vehicle door characterised by an extrusion with a hollow and/or hex cross-section (21) serving as a support and with at least one limb (22) serving as an intermediate and connecting portion (13 to 15 and 16 to 18 respectively).

8. A blank for a frame portion for a vehicle door characterised by an extrusion with a respective hollow and/or hex cross-section (21) serving as a support and with at least one limb (22) serving as an intermediate and connection portion (13 to 15 and 16 to 18 respectively).

## Revendications

1. Porte de véhicule, en particulier porte de véhicule automobile dans une construction en caisson qui comporte un cadre de porte (1) porteur, formant un module de support de porte (1a) avec au moins une partie de cadre avant et une partie arrière ou une partie supérieure ou une partie inférieure (2, 3, 4, 5) et présente d'autres éléments de porte, caractérisée en ce que la partie de cadre inférieure (5) et la partie de cadre avant ainsi que la partie de cadre arrière (2, 3) sont chacune des éléments profilés extrudés (20) et sont pourvues au moins sur une partie de leur longueur, d' une section transversale creuse et/ou en caisson (21), servant de support, et d'au moins une branche (22) servant de pièce intermédiaire et de pièce de raccord (13 à 15 ou 16 à 18).

2. Porte de véhicule selon la revendication 1, caractérisée en ce que les branches (22) sont coupées pour former des pièces intermédiaires (13 à 15).

3. Porte de véhicule selon une ou plusieurs des revendications précédentes, caractérisée en ce que les branches (22) présentent chacune des pièces de bordure étroites ainsi qu'allongées/éléments coudés (24), servant à la fixation de parties intérieures de porte.

4. Porte de véhicule selon une ou plusieurs des revendications précédentes, caractérisée en ce que la branche (22) au moins en partie coudée de l'élément profilé extrudé (20) s'étend dans le prolongement de l'élément profilé (27) formant le contour extérieur (26) du cadre de porte (1) de la section transversale creuse et/ou en caisson (21).

5. Porte de véhicule selon une ou plusieurs des revendications précédentes, caractérisée en ce qu'un canal de guidage (29) pour une vitre de fenêtre est intégré en même temps dans la section transversale creuse et/ou en caisson (21) de l'élément profilé extrudé (20), dans la partie profilée formant le contour intérieur (28) du cadre de porte (1).

6. Porte de véhicule selon une ou plusieurs des revendications précédentes, caractérisée en ce que la branche (22) est coudée.

7. Elément en cadre pour une porte de véhicule automobile, caractérisé par un profilé extrudé avec une section transversale creuse et/ou en caisson (21), servant de support, et avec au moins une branche (22) servant de pièce intermédiaire et de pièce de raccord (13 à 15 ou 16 à 18).

8. Ebauche pour un élément en cadre pour une porte de véhicule, caractérisée par un profilé extrudé avec chaque fois une section transversale creuse et/ou en caisson (21) servant de support et avec au moins une branche (22) servant de pièce intermédiaire et de pièce de raccord (13 à 15 ou 16 à 18).
